# EUROPEAN PATENT SPECIFICATION

(11) **EP 4 426 068 B1**
(45) Date of publication and mention of the grant of the patent: **07.10.2026**
(21) Application number: 23159337.7
(22) Date of filing: 01.03.2023
(51) Int. Cl.: H05B 47/11

(54) **AUTOMATED COMMISSIONING WITH REGARD TO SELF-GROUPING FOR A LUMINAIRE, CORRESPONDING SYSTEM AND METHOD**
AUTOMATISIERTE INBETRIEBNAHME HINSICHTLICH SELBSTGRUPPIERUNG FÜR EINE LEUCHTE, ZUGEHÖRIGES SYSTEM UND VERFAHREN
MISE EN SERVICE AUTOMATISÉE EN VUE D'UN AUTO-GROUPAGE POUR UN LUMINAIRE, SYSTÈME ET PROCÉDÉ CORRESPONDANTS

(43) Date of publication of application: 04.09.2024
(73) Proprietor: Tridonic GmbH & Co KG, 6851 Dornbirn (AT)
(72) Inventor: Vizzotto de Menezes, Cristiano, 6850 Dornbirn (AT); Parmar, Jugal, 6850 Dornbirn (AT); Barden, Alisson, 6850 Dornbirn (AT)
(74) Representative: Beder, Jens

(56) References cited:
- WO-A1-2013/164670
- WO-A2-2010/122457
- US-A1- 2021 392 732

## Description

For luminaires that are equipped with at least two drivers that can be individually controlled in order to cause of the luminaire to emit direct light and/or indirect light, it is necessary to assign each driver to a group to which each respective driver belongs. One group corresponds to the drivers causing indirect light and another group to the drivers causing direct light emission. A group consists of at least one or a plurality of output instances, such as LED-drivers, and enables the grouped output instances to be individually addressable via a DALI (Digital Addressable Lighting Interface) bus. Preferably, the DALI system is a DALI-2 system. This facilitates the operation of drivers in groups within a luminaire or a lighting system.

In order to commission the luminaire or the lighting system, usually, a person must manually configure the groups. In general, the person is a commissioning engineer or electrician, who identifies the luminaires and the drivers inside the luminaire and selects which group they shall be assigned to. The assignment is usually done by using a commissioning device, or an app executed for example on a smartphone. However, the manual commissioning of the luminaire requires much effort in terms of time and costs. Additionally, it is technically disadvantageous to design an interface that is merely used for the commissioning as well as to provide additional technical means that enable the manual operation.

WO 2010/122457 A2 discloses a system for controlling a plurality of light sources by means of light groups, wherein each light group synchronously controls a subset of the plurality of light sources. The system comprises: a central controller a plurality of light sources wired to the central controller; and a light sensor wired to the central controller. The central controller is configured to: receive a measurement signal from the light sensor; based on the received measurement signal, determine a subset of light sources that are in optical contact with the light sensor; and include the subset of light sources in a light group associated with the light sensor.

US 2021/392732 A1 discloses a method for assigning light sensors for regulating a lighting system includes switching the lighting of the lighting system into a first switching state such that a first lighting group emits light with a predetermined luminous flux, switching the lighting of the lighting system into a second switching state such that the first lighting group emits light with a reduced luminous flux by comparison with the predetermined luminous flux or emits no light. The method further includes measuring a luminance of the light reflected by a reference surface respectively assigned to the light sensors with the aid of the light sensors to determine a first measurement value in the first switching state and a second measurement value in the second switching state. The method may further include assigning a sensor to the first lighting group based on a comparison of difference values formed for each of the light sensors, and storing the assignment.

WO 2013/164670 A1 discloses light fixture systems and application of ambient light measurement for improving lighting system efficiency.

US 2013/0155392 A1 discloses an auto-commissioning for spatial commissioning a lighting system. Spatial commissioning of a lighting system is the process of forming groups of light fixtures that are colocated and/or groups of sensors that are colocated. The auto-commissioning comprises a plurality of light fixtures, a sensor and a power device to which the plurality of light fixtures and the sensors are connected. In general, the power device sequentially causes the light fixtures to be powered by a predetermined power signal and the sensor generates a sensor signal corresponding to a measured amount of light. On the basis of the filtered sensor signal it is recognized the group of light fixtures that is colocated and/or the group of sensors that is colocated. Moreover, it is possible to determine whether a light fixture and a sensor are colocated. However, the ability to group light fixtures and/or sensors is limited to the spatial grouping. Consequently, this document does not provide a solution for automatically grouping drivers of a luminaire into groups corresponding to direct light or indirect light. Moreover, the grouping merely allows the grouping of light fixtures and does not allow grouping a plurality of drivers within one light fixture, the drivers being provided to cause the luminaire emitting direct light and/or indirect light.

Therefore, it is the aim of the present invention to provide a luminaire, method and system, which overcome the above-mentioned disadvantages.

The luminaire defined in independent system claim 1 provides an advantageous solution to problem. The dependent claims define further advantageous embodiments.

According to the invention, a luminaire comprises at least two light sources, at least two drivers, each for a respective light source, at least a first driver of the at least two drivers for a first light source of the at least two light sources that emits direct light and at least a second driver of the at least two drivers for a second light source of the at least two light sources that emits indirect light, and a controller. The luminaire further comprises a sensor that is configured to measure an amount of incident light, or, alternatively, the controller is configured to obtain intensity information from a sensor arranged externally to the luminaire and configured to measure the amount of incident light. The at least two drivers can be classified into drivers for a light source that emits direct light and drivers for a light source that emits indirect light. Furthermore, the luminaire comprises a controller that is configured to control the operation of the at least two drivers by means of sequentially switching on the at least one first driver or the at least one second driver.

Preferably, sequentially switching on a driver means that before a driver is switched on, the previously switched on driver is switched off again. The sensor provides intensity information corresponding to the amount of light measured by the sensor for each time period when the at least one first driver or the at least one second driver is switched on. Alternatively, the controller obtains the intensity information from the sensor arranged externally to the luminaire. The obtained intensity information (measured intensity) is evaluated and each of the at least two drivers is associated with a corresponding intensity information, respectively. Based thereon each of the at least two drivers is assigned respectively to either a first group that corresponds to direct light or a second group that corresponds to indirect light based on the evaluated intensity information.

The inventive solution has the advantage that the configuration of the groups when commissioning the luminaire can be automated to a high degree. In addition, the technical design of an interface and the technical means for the commissioning procedure are not necessary, which reduces the technical means that are necessary to enable the same functionality of the luminaire or the system thereof. Moreover, the automated commissioning for the self-grouping of a plurality of drivers in a luminaire drastically reduces the time and costs.

A second aspect of the present invention provides, the controller may be configured to further store the assigned group for each of the at least two drivers in at least one storage means. This has the advantage that group association of the drivers can be stored and the drivers of the assigned group can be queried and addressed by other connected devices when making the at least one storage means accessible. Moreover, the controller is configured to store the group information, which avoids the need of additional technical means.

A third aspect of the present invention provides, advantageously in addition to the subject matter of the second aspect, at least one storage means that is designed to further form a unit with the controller. Alternatively or additionally, each of the at least two drivers comprises one storage means.

Such configuration has the advantage that the group information (information to which group each individual driver is assigned) for each driver can be stored within a central storage means that forms a unit with the controller. Thus, space can be saved as the storage means forms a unit with the controller of the luminaire and the access to the information can be facilitated, as the group information for all groups (and drivers, respectively) is stored within one central storage means. In case that each of the at least two drivers comprises one storage means, in addition to the main storage means, the redundant storage within each storage means can increase the security of the group information. Otherwise, if the group information is only stored within the storage of each driver, the security of the group information increases as this configuration established a distributed storage system.

According to a fourth aspect, the controller further evaluates the obtained information by a comparison of each obtained intensity information with an intensity threshold.

Comparison of the measured intensities associated with the different drivers has the advantage that the intensity information can be evaluated in a rather simple manner, which avoids unnecessary complexity and reduces the requirements to the technical means.

According to a fifth aspect, the sensor is mounted such that the sensor is directed towards a half space towards which the light source that emits direct light is directed to. Alternatively, the sensor is mounted such that the sensor is directed towards a half space at which the light source that emits indirect light is directed to.

Such configuration has the advantage, that the respective mounting of the sensor allows to capture more (mounting direction towards direct light emission) or less amount of light (mounting direction towards the indirect light emission) for the direct light when the driver causing direct light emission is turned on, whereas the sensor captures less or more amount of light for the indirect light when the driver causing indirect light emission is turned on). Thus, since the amount of light that is captured behaves inverse for the direct and the indirect light emission, the definition of an appropriate threshold allows distinguishing between direct light and indirect light.

According to sixth aspect of the invention, the controller is further configured to assign a driver to the group of direct light, in case that the intensity information exceeds the threshold and to assign a driver to the group of indirect light, in case that the intensity information falls below the threshold. Alternatively, the controller is further configured to assign a driver to the group of direct light, in case that the intensity information falls below the threshold and to assign a driver to the group of indirect light, in case that the intensity in-formation exceeds the threshold. Thus, the assignment can be made rather simple, without the need of complex technical means or complex processing of the intensity information.

According to 7th aspect of the invention, the sensor is further designed to form a unit with the controller, which has the advantage that the necessary space for the sensor and the controller can be reduced.

According to an eighth aspect of the invention, the sensor is further an external sensor and is configured to measure an amount of incident light. The controller is further configured to obtain intensity information from the external sensor.

Such a configuration allows to reduce the necessary space within the luminaire for the sensor, as the sensor is an external sensor. Moreover, it is possible to easily connect the luminaire to a system that provides an external sensor.

Further, the luminaire is configured to communicate using a DALI bus interface, preferably a DALI-2 bus interface. Such a configuration of the present invention possesses the advantage that the luminaire enables communication via an industry-standardized protocol.

According to a tenth aspect of the present invention, at least two drivers form distinct entities that are group-wise addressable via the DALI bus interface or DALI-2 bus interface based on the assigned group of either direct light or indirect light.

The foregoing aspect of the present invention possesses the advantage that the assigned groups of direct light or indirect light refer to distinct entities that can be addressed within the DALI/DALI-2 system. That facilitates the control of a luminaire whenever the group of direct lights or the group of indirect lights shall be controlled separately or together.

An eleventh aspect of the present invention provides a system that comprises a plurality of luminaires according to any of the preceding claims, wherein the plurality of luminaires are addressable via the DALI or DALI-2-bus system.

The foregoing embodiment of the present invention possesses the advantage that each luminaire is able to communicate with another luminaire or other device within the system via DALI or DALI-2. In addition, each driver inside each luminaire is addressable directly or group-wise.

A twelfth aspect of the present invention provides, in addition to the eleventh embodiment, the system that further comprises the sensor, wherein the sensor is addressable via the DALI or DALI-2 bus system.

The foregoing embodiment of the present invention has the advantage that one dedicated sensor can be used to provide the intensity information to the entire system of luminaires. Thus, the automated commissioning works for each luminaire based on the intensity information of the one dedicated sensor.

Hereinafter, the specific embodiments of the present invention are discussed with reference to the following drawings and description.
- Fig. 1: illustrates an exemplary schematic representation of a luminaire for automatic commissioning with regard to self-grouping.
- Fig. 2: illustrates an exemplary flow diagram of the method for automatic commissioning with regard to self-grouping for a luminaire of the present invention.

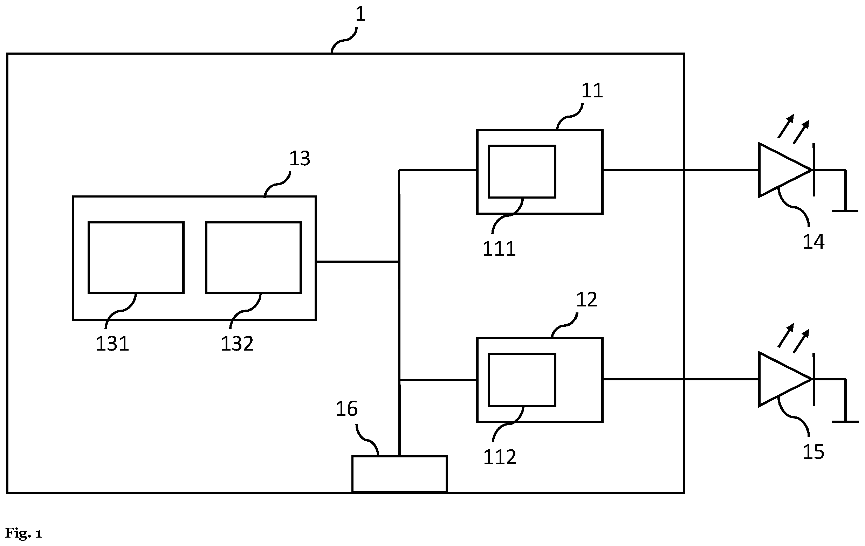

Fig. 1 shows a schematic layout of a luminaire 1 of the present invention. The luminaire comprises two drivers 11, 12 and a controller 13. The first driver 11 is configured to operate an LED 14 as an example for a light source that emits direct light and the second driver 12 is configured to operate and LED 15 as an example for the further light source and that emits indirect light. It is to be noted that hereinafter the light sources are considered to be LEDs. However the present invention is not limited to using LEDs as light sources, even different light sources driven by the first driver 11 or the second driver 12 may be used. Further, the term "direct light" is used for light emission of the luminaire directly emitted towards an area to be illuminated, for example towards the floor of the room in case that the luminaire is a pendant luminaire. "Indirect light" is light emitted towards the ceiling or, for example, as ambient light but not directly towards the floor of the room. The same consideration is valid for desk lamps or freestanding lamps (that floor lamps) which will be considered in the following explanations.

The luminaire 1 is a freestanding lamp, further abbreviated with FSL, that consists of a lampstand portion, which is configured to allow the FSL to be placed on the ground. Moreover, a portion that comprises at least a first light source 14 and a second light source 15 is mounted on the lampstand portion. However, the present invention is not necessarily limited to a FSL as indicated above. Any luminaire that provides the schematic layout as shown in Fig. 1 and that is capable of emitting direct and indirect light is capable of automated commissioning with regard to self-grouping. In particular, such a luminaire 1 could be a luminaire 1 that is mounted on a wall or the luminaire could even be a streetlight of any form. Hence, such a luminaire could be located indoor as well as outdoor.

The first LED 14 is preferably provided on the lighting portion of the luminaire 1 to emit direct light that is directed downwards. Direct light is used to concentrate the emitted light on a specific area. With regard to a FSL, the direct light is usually concentrated on the area below the lighting portion. That might be achieved by providing a relatively narrow light cone, which is emitted from the light source 1 advantageously using reflectors and/or lenses. The second LED 15 is provided on the lighting portion of the luminaire 1 to emit indirect light that is directed upwards. Similar to the first light source 15, the second light source 15 may cooperate with an arrangement of reflectors and/or lenses or any other light directing device. Indirect light is used for glare free illumination of a wider area. Hence, indirect light does not possess a specific directionality, since it is rather providing an evenly distributed light illumination. The second LED 15 for indirect light could serve to provide an ambient light. The illustrated LEDs 14, 15 are not limited to merely one LED respectively. The LEDs 14, 15 are usually provided as groups of LEDs arranged in an LED module, whereby each module is operable by one corresponding LED-driver 11 or 12. The single LEDs 14 and 15 shown in figure 1 are thus only indicative for the respective light source. In addition, the light sources may be any device or combination of devices that creates artificial light from electrical power provided by the respective driver 11, 12.

The drivers 11, 12 are LED drivers. The first LED driver 11 is connected to the LED 14 in order to operate LED 14 in order to emit direct light. The LED drivers 11, 12 may be designed as a constant current LED drivers or as constant voltage LED drivers. A constant current LED driver provides a desired constant current to a connected LED by converting incoming AC power into DC power and then regulating the current flowing through the connected LED.

The LED drivers 11, 12 provide internal storage means 111, 112 that enable to store information within the LED drivers 11, 12 for the embodiment that is illustrated in Fig. 1, this configuration allows the storage of the group information within the storage means 111, 112. It is preferable to store the group information for each respective LED driver 11, 12 within the corresponding internal storage means 111, 112 separately. That is, the group information related to LED driver 11 is stored in the internal storage means 111 and the group information related to LED driver 12 is stored in the internal storage means 112. The determination of the association between the LED drivers 11, 12 and the respective light source will be explained below in detail. However, any other information that shall be stored can be stored within the internal storage means 111, 112. In particular, it may be stored every group member, for instance the LED drivers 11, 12, and its corresponding group within the internal storage means 111, 112. Moreover, the internal storage means 111, 112 is preferably configured to be accessible internally through the corresponding LED driver 11, 12 and through the controller 13. This can be realized via a connection for communication, e.g. a DALI-2 bus, that is discussed later in more detail. However, the internal storage means 111, 112 may be accessible from any device that is connected to a connection for communication. Alternatively, the accessibility of the storage means 111, 112 may be limited to predefined devices to ensure the secure communication.

The controller 13 is preferably an application controller of a DALI-2 system. This is, within the DALI-2 system, the input devices such as sensors or switches, do not communicate with the control gear, such as LED drivers, directly. The commands are first processed by the application controller and afterwards sent to the LED drivers. Hence, it is advantageous to use the application controller for the present invention in order to avoid additional technical means. Furthermore, the application controller 13 features an internal sensor 131 and an internal storage means 132. The internal storage means 132 provides the same abilities as the previously mentioned internal storage means 111, 112 of the drivers 11, 12. Additionally, the internal storage means 132 could be configured to store any further information of a system of luminaires 1. The internal sensor 131 is a built-in light sensor that measures the amount of incident light. Such a light sensor 131 might be provided by a photodiode. The light sensor 131 is designed to measure the amount of incident light that enters the light sensor 131 through a transparent portion of the housing. That can be realized by using the photo effect such that a sensor signal is generated that is proportional to the amount of incident light. This sensor signal that is generated is provided to the application controller 13 via the DALI-2 bus.

The DALI-2 bus interface 16 enables DALI-2 communication for the connected instances. Preferably, the DALI-2 bus interface is connected to an internal bus power supply that is not illustrated. Alternatively, the DALI-2 bus is connected to an external bus system.

The luminaire 1 of Fig. 1 does not illustrate additional technical means that are necessarily included within a well-known common luminaire system. For instance, the luminaire 1 can have an input interface to obtain user instructions via buttons. A wireless communication unit could be provided to enable wireless communication with a communication system and user instructions that are provided wirelessly. For instance, a swarm module could be provided to enable IR communication of luminaires. Furthermore, the luminaire 1 may be provided with an external power supply interface or an internal power supply. Especially, if the luminaire 1 contains a power supply interface, an additional power converter is needed to convert the AC power to DC power. Moreover, the luminaire may provide an additional control input with switch inputs, which is compatible with the DALI-2 bus.

Furthermore, the luminaire of Fig. 1 could be embedded in a system of a plurality of luminaires of the present invention . In particular, instead of using an internal sensor 131, an external sensor can be provided that is able to communicate with each luminaire 1 of the system. This can be realized by embedding each luminaire 1 to an external DALI-2 bus. Hence, it would be possible to automatically commission each one of the luminaires 1 as long as the measured intensity information by the dedicated sensor can unambiguously be identified to correspond to direct or indirect light caused by operation of a particular driver 11, 12. For instance, a sensor and a plurality of luminaires 1 in the same room will be able to provide the subject matter of the present invention. Note that every component of the described luminaire 1 could also be designed as a stand-alone device.

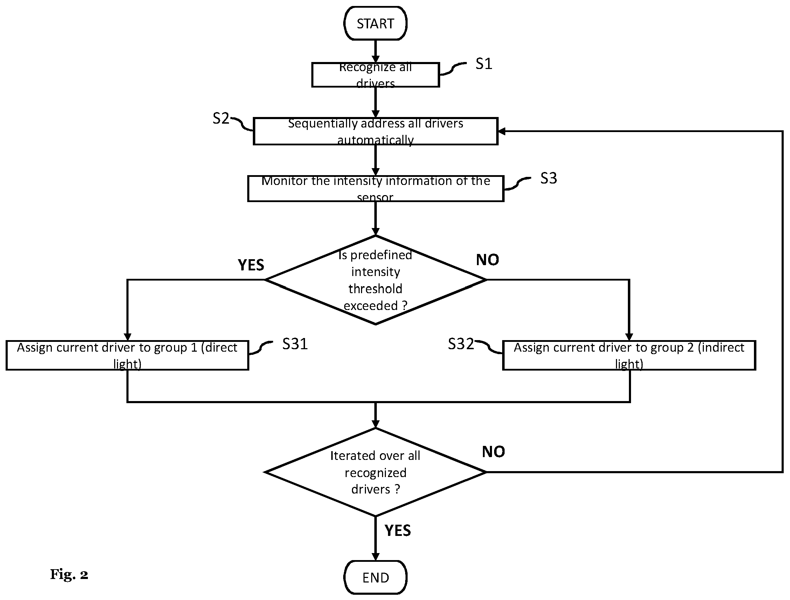

In the following, a method as illustrated in Fig. 2, is described. The method is executed by the previously disclosed technical means as described for Fig. 1.

In step S1, the application controller 13 recognizes all drivers 11, 12 automatically. This is achieved via the DALI-2 bus connection of the application controller and the drivers (11, 12).

In step S2, the application controller 13 sequentially addresses all drivers 11, 12 automatically, which means that the controller controls the drivers 11, 12 to switch on and off again one after the other. Each driver 11, 12 is addressed via the DALI-2 bus.

In step S3, the application controller 13 monitors the intensity information of the sensor 131. The application controller 13 sets the addressed controller to 100%, whereas the other drivers are set to 0%. This can be realized by controlling the current that the drivers shall provide to the LEDs 14, 15. The sensor 131 measures and intensity and the sensor 131 generates an intensity signal that carries the intensity information. The intensity signal is communicated to the application controller 13 via the DALI-2 bus. It is to be noted that measurement of the intensity is performed for each time interval in which one of the drivers is switched on. The measured intensity is are associated to the driver 11, 12 which caused the light emission underlying the measurement.

The application controller 13 then evaluates the obtained measured intensity for a specific driver 11, 12. In case that the measured intensity exceeds a predefined threshold, the method continues with step S31 and otherwise the method continues with step S32. The evaluation can be based on the intensity information of the raw sensor data. However, it is also possible to preprocess the signal by, e.g. filtering the intensity signal or averaging over the intensity signal. It is possible to merely compare the mean value of the intensity signal to the predefined threshold. In addition, it is possible to smooth out the intensity signal to avoid errors caused by noise produced. It is also possible to have the inverse process in case that it is expected to fall below the threshold for direct light and exceed the threshold for indirect light. Furthermore, the threshold may be adaptively defined. For instance, in a relatively bright environment the sensor 131 could measure the amount of light for a particular period and the application controller 13 could use the averaged intensity value as an offset for the evaluation, e.g. by increasing the threshold about the averaged intensity value. In other words, for different environments, the luminaire 1 could be calibrated first.

In step S31, the application controller 13 assigns the driver 11 or 12 to group 1 that corresponds to direct light. In step S32, the application controller 13 assigns the driver 12 or 11 to group 2 that corresponds to indirect light.

After the assignment was executed, the application controller 13 verifies if the method was executed for all recognized drivers 11, 12 in step S1. In case that every recognized driver 11, 12 has been assigned to group 1 or group 2, the method ends and regular operation of the luminaire 1 can be started. In the other case, the method continues with step S2.

## Claims

1. Luminaire that comprises at least two light sources (14, 15) and at least two drivers (11, 12), at least a first driver (11) of the at least two drivers (11, 12) for a first light source (14) of the at least two light sources (14, 15) that emits direct light and at least a second driver (12) of the at least two drivers (11, 12) for a second light source (15) of the at least two light sources (14, 15) that emits indirect light, a controller (13), and
the luminaire further comprises a sensor (131) that is configured to measure an amount of incident light or the controller (13) is configured to obtain intensity information corresponding to the amount of incident light from a sensor arranged externally to the luminaire, and the luminaire is
**characterized in that**
the controller (13) is configured to control the at least two drivers (11, 12) by means of sequentially switching on the at least one first driver (11) and then the at least one second driver (12), and
obtain respective intensity information corresponding to the amount of light measured by the sensor (131) or obtained by the controller (13) from the sensor arranged externally to the luminaire for each time period when the at least one first driver (11) is on and when the at least one second driver (12) is on, and evaluate the obtained intensity information, whereby each of the at least two drivers (11, 12) is associated with a corresponding intensity information respectively, and
assign each of the at least two drivers (11, 12) respectively to either a first group that corresponds to direct light or a second group that corresponds to indirect light based on the evaluated intensity information.

2. Luminaire according to claim 1, wherein
the controller (13) is configured to store the assigned group of each of the at least two drivers (11, 12) in at least one storage means (111, 112, 132).

3. Luminaire according to claim 2, wherein
the at least one storage means (132) is designed to form a unit with the controller (13) or each of the at least two drivers (11, 12) comprises one storage means (111, 112).

4. Luminaire according to any of the preceding claims, wherein
the controller (13) evaluates the obtained intensity information through a comparison of each obtained intensity information with an intensity threshold.

5. Luminaire according to claim 4, wherein
the luminaire comprises the sensor and
the sensor (131) is mounted such that the sensor (131) is directed towards a first half space at which the at least one first light source (14) that emits direct light is directed to, or
the sensor (131) is mounted, such that the sensor (131) is directed towards a second half space at which the at least one second light source (15) that emits indirect light is directed to.

6. Luminaire according to claim 5, wherein
the controller (13) is configured to assign a driver (11) of the at least two drivers (11, 12) to the first group of direct light, in case that the intensity information exceeds the threshold and to assign the other driver ( 12) of the at least two drivers (11, 12) to the second group of indirect light, in case that the intensity information falls below the threshold, or
the controller (13) is configured to assign the driver (11) of the at least two drivers (11, 12) to the first group of direct light, in case that the intensity information falls below the threshold and to assign the other driver (12) of the at least two drivers (11, 12) to the second group of indirect light, in case that the intensity information exceeds the threshold.

7. Luminaire according to any of the preceding claims, wherein
the luminaire comprises the sensor and
the sensor (131) is designed to form a unit with the controller (13).

8. Luminaire according to any of the preceding claims, wherein
the luminaire comprises a DALI-2 bus interface.

9. Luminaire according to claim 8, wherein
the at least two drivers state distinct entities that are group-wise addressable via the DALI-2-bus interface based on the assigned group of either direct light or indirect light.

10. System that comprises a plurality of luminaires (1) including at least two luminaires (1) according to any of the preceding claims, wherein the plurality of luminaires (1) are addressable via a DALI, preferably DALI-2-bus system.

11. System according to claim 10, wherein
the system comprises the sensor (131), wherein the sensor is addressable via the DALI or DALI-2-bus system.

12. Method for automatic commissioning for a luminaire (1) according to any one of claims 1 to 9 or a system comprising a plurality of luminaires including at least two luminaires (1) according to any one of claims 10 to 11, comprising:
controlling the at least two drivers (11, 12) by means of sequentially switching on (S2) the at least two drivers (11, 12), and
obtaining respective intensity information (S3) corresponding to the amount of light measured by the sensor (131) or obtained by the controller (13) for each time period when one of the at least two drivers (11, 12) is switched on, and
evaluating the obtained intensity information, whereby each of the at least two drivers (11, 12 is associated with a corresponding intensity information respectively, and
assigning each of the at least two drivers (11, 12) respectively to either the first group that corresponds to direct light or the second group that corresponds to indirect light based on the evaluated intensity information (S31, S32).

## Patentansprüche

1. Leuchte, umfassend mindestens zwei Lichtquellen (14, 15) und mindestens zwei Treiber (11, 12), wobei mindestens ein erster Treiber (11) der mindestens zwei Treiber (11, 12) für eine erste Lichtquelle (14) der mindestens zwei Lichtquellen (14, 15) vorgesehen ist, welche Direktlicht emittiert, und mindestens ein zweiter Treiber (12) der mindestens zwei Treiber (11, 12) für eine zweite Lichtquelle (15) der mindestens zwei Lichtquellen (14, 15) vorgesehen ist, welche Indirektlicht emittiert, einen Controller (13),
wobei die Leuchte ferner einen Sensor (131) umfasst, der dazu ausgelegt ist, eine Menge einfallenden Lichts zu messen, oder der Controller (13) dazu ausgelegt ist, Intensitätsinformationen, die der Menge des einfallenden Lichts entsprechen, von einem außerhalb der Leuchte angeordneten Sensor zu erhalten,
**dadurch gekennzeichnet, dass**
der Controller (13) dazu ausgelegt ist,
die mindestens zwei Treiber (11, 12) durch sequentielles Einschalten des mindestens einen ersten Treibers (11) und anschließend des mindestens einen zweiten Treibers (12) anzusteuern,
jeweilige Intensitätsinformationen zu erhalten, die der vom Sensor (131) gemessenen Lichtmenge entsprechen oder die vom Controller (13) von dem außerhalb der Leuchte angeordneten Sensor erhalten werden, für jeden Zeitraum, in dem der mindestens eine erste Treiber (11) eingeschaltet ist, und in dem der mindestens eine zweite Treiber (12) eingeschaltet ist,
die erhaltenen Intensitätsinformationen auszuwerten, wobei jedem der mindestens zwei Treiber (11, 12) jeweils eine zugehörige Intensitätsinformation zugeordnet wird, und
jeden der mindestens zwei Treiber (11, 12) jeweils entweder einer ersten Gruppe, die dem Direktlicht entspricht, oder einer zweiten Gruppe, die dem Indirektlicht entspricht, auf Grundlage der ausgewerteten Intensitätsinformationen zuzuordnen.

2. Leuchte nach Anspruch 1,
wobei der Controller (13) dazu ausgelegt ist, die zugeordnete Gruppe jedes der mindestens zwei Treiber (11, 12) in mindestens einer Speichereinrichtung (111, 112, 132) zu speichern.

3. Leuchte nach Anspruch 2,
wobei die mindestens eine Speichereinrichtung (132) dazu ausgebildet ist, eine Einheit mit dem Controller (13) zu bilden, oder wobei jeder der mindestens zwei Treiber (11, 12) eine Speichereinrichtung (111, 112) umfasst.

4. Leuchte nach einem der vorhergehenden Ansprüche,
wobei der Controller (13) die erhaltenen Intensitätsinformationen durch einen Vergleich jeder erhaltenen Intensitätsinformation mit einem Intensitätsschwellwert auswertet.

5. Leuchte nach Anspruch 4,
wobei die Leuchte den Sensor umfasst und
der Sensor (131) derart montiert ist, dass der Sensor (131) auf einen ersten Halbraum ausgerichtet ist, in den die mindestens eine erste Lichtquelle (14), die Direktlicht emittiert, gerichtet ist,
oder
der Sensor (131) derart montiert ist, dass der Sensor (131) auf einen zweiten Halbraum ausgerichtet ist, in den die mindestens eine zweite Lichtquelle (15), die Indirektlicht emittiert, gerichtet ist.

6. Leuchte nach Anspruch 5,
wobei der Controller (13) dazu ausgelegt ist, einen Treiber (11) der mindestens zwei Treiber (11, 12) der ersten Gruppe des Direktlichts zuzuordnen, falls die Intensitätsinformation den Schwellwert überschreitet, und den anderen Treiber (12) der mindestens zwei Treiber (11, 12) der zweiten Gruppe des Indirektlichts zuzuordnen, falls die Intensitätsinformation unter den Schwellwert fällt,
oder
wobei der Controller (13) dazu ausgelegt ist, den Treiber (11) der mindestens zwei Treiber (11, 12) der ersten Gruppe des Direktlichts zuzuordnen, falls die Intensitätsinformation unter den Schwellwert fällt, und den anderen Treiber (12) der mindestens zwei Treiber (11, 12) der zweiten Gruppe des Indirektlichts zuzuordnen, falls die Intensitätsinformation den Schwellwert überschreitet.

7. Leuchte nach einem der vorhergehenden Ansprüche,
wobei die Leuchte den Sensor umfasst und
der Sensor (131) dazu ausgebildet ist, eine Einheit mit dem Controller (13) zu bilden.

8. Leuchte nach einem der vorhergehenden Ansprüche,
wobei die Leuchte eine DALI-2-Bus-Schnittstelle umfasst.

9. Leuchte nach Anspruch 8,
wobei die mindestens zwei Treiber unterschiedliche Einheiten darstellen, die auf Grundlage der zugeordneten Gruppe von Direktlicht oder Indirektlicht gruppenweise über die DALI-2-Bus-Schnittstelle adressierbar sind.

10. System, umfassend eine Mehrzahl von Leuchten (1), einschließlich mindestens zweier Leuchten (1) nach einem der vorhergehenden Ansprüche,
wobei die Mehrzahl von Leuchten (1) über ein DALI-, vorzugsweise DALI-2-Bussystem adressierbar ist.

11. System nach Anspruch 10,
wobei das System den Sensor (131) umfasst,
wobei der Sensor über das DALI- oder DALI-2-Bussystem adressierbar ist.

12. Verfahren zur automatischen Inbetriebnahme einer Leuchte (1) nach einem der Ansprüche 1 bis 9 oder eines Systems, das eine Mehrzahl von Leuchten einschließlich mindestens zweier Leuchten (1) nach einem der Ansprüche 10 bis 11 umfasst,
umfassend:
Ansteuern der mindestens zwei Treiber (11, 12) durch sequentielles Einschalten (S2) der mindestens zwei Treiber (11, 12),
Erhalten jeweiliger Intensitätsinformationen (S3), die der vom Sensor (131) gemessenen Lichtmenge entsprechen oder die durch den Controller (13) erhalten werden, für jeden Zeitraum, in dem einer der mindestens zwei Treiber (11, 12) eingeschaltet ist,
Auswerten der erhaltenen Intensitätsinformationen, wobei jedem der mindestens zwei Treiber (11, 12) jeweils eine entsprechende Intensitätsinformation zugeordnet wird, und Zuordnen jedes der mindestens zwei Treiber (11, 12) entweder der ersten Gruppe, die dem Direktlicht entspricht, oder der zweiten Gruppe, die dem Indirektlicht entspricht, auf Grundlage der ausgewerteten Intensitätsinformationen (S31, S32).

## Revendications

1. Luminaire comprenant au moins deux sources lumineuses (14, 15) et au moins deux pilotes (11, 12), au moins un premier pilote (11) des au moins deux pilotes (11, 12) destiné à une première source lumineuse (14) des au moins deux sources lumineuses (14, 15) émettant une lumière directe et au moins un second pilote (12) des au moins deux pilotes (11, 12) destiné à une seconde source lumineuse (15) des au moins deux sources lumineuses (14, 15) émettant une lumière indirecte, un contrôleur (13),
le luminaire comprenant en outre un capteur (131) configuré pour mesurer une quantité de lumière incidente, ou le contrôleur (13) étant configuré pour obtenir des informations d'intensité correspondant à la quantité de lumière incidente à partir d'un capteur disposé à l'extérieur du luminaire,
**caractérisé en ce que**
le contrôleur (13) est configuré pour :
commander les au moins deux pilotes (11, 12) par mise en marche séquentielle de l'au moins un premier pilote (11), puis de l'au moins un second pilote (12),
obtenir des informations d'intensité respectives correspondant à la quantité de lumière mesurée par le capteur (131) ou obtenues par le contrôleur (13) à partir du capteur disposé à l'extérieur du luminaire, pour chaque période pendant laquelle l'au moins un premier pilote (11) est en marche et pendant laquelle l'au moins un second pilote (12) est en marche,
évaluer les informations d'intensité obtenues, chaque pilote parmi les au moins deux pilotes (11, 12) étant respectivement associé à une information d'intensité correspondante, et
affecter chacun des au moins deux pilotes (11, 12) soit à un premier groupe correspondant à la lumière directe, soit à un second groupe correspondant à la lumière indirecte, sur la base des informations d'intensité évaluées.

2. Luminaire selon la revendication 1,
dans lequel le contrôleur (13) est configuré pour stocker le groupe attribué à chacun des au moins deux pilotes (11, 12) dans au moins un moyen de stockage (111, 112, 132).

3. Luminaire selon la revendication 2,
dans lequel ledit au moins un moyen de stockage (132) est conçu pour former une unité avec le contrôleur (13), ou chacun des au moins deux pilotes (11, 12) comprend un moyen de stockage (111, 112).

4. Luminaire selon l'une quelconque des revendications précédentes, dans lequel le contrôleur (13) évalue les informations d'intensité obtenues au moyen d'une comparaison de chaque information d'intensité obtenue avec un seuil d'intensité.

5. Luminaire selon la revendication 4, dans lequel le luminaire comprend le capteur et le capteur (131) est monté de manière à être orienté vers un premier demi-espace vers lequel est dirigée l'au moins une première source lumineuse (14) émettant une lumière directe, ou est monté de manière à être orienté vers un second demi-espace vers lequel est dirigée l'au moins une seconde source lumineuse (15) émettant une lumière indirecte.

6. Luminaire selon la revendication 5, dans lequel le contrôleur (13) est configuré pour affecter un pilote (11) des au moins deux pilotes (11, 12) au premier groupe de lumière directe lorsque l'information d'intensité dépasse le seuil, et affecter l'autre pilote (12) au second groupe de lumière indirecte lorsque l'information d'intensité est inférieure au seuil, ou inversement lorsque l'information d'intensité est respectivement inférieure ou supérieure audit seuil.

7. Luminaire selon l'une quelconque des revendications précédentes, dans lequel le luminaire comprend le capteur et le capteur (131) est conçu pour former une unité avec le contrôleur (13).

8. Luminaire selon l'une quelconque des revendications précédentes, dans lequel le luminaire comprend une interface de bus DALI-2.

9. Luminaire selon la revendication 8, dans lequel les au moins deux pilotes constituent des entités distinctes pouvant être adressées par groupe au moyen de l'interface de bus DALI-2 sur la base du groupe attribué de lumière directe ou de lumière indirecte.

10. Système comprenant une pluralité de luminaires (1), comprenant au moins deux luminaires (1) selon l'une quelconque des revendications précédentes, ladite pluralité de luminaires (1) pouvant être adressée via un système de bus DALI, de préférence DALI-2.

11. Système selon la revendication 10, dans lequel le système comprend le capteur (131), le capteur étant adressable via le système de bus DALI ou DALI-2.

12. Procédé de mise en service automatique d'un luminaire (1) selon l'une quelconque des revendications 1 à 9 ou d'un système comprenant une pluralité de luminaires, comprenant au moins deux luminaires (1) selon l'une quelconque des revendications 10 à 11, comprenant:
la commande des au moins deux pilotes (11, 12) par mise en marche séquentielle (S2) des au moins deux pilotes (11, 12),
l'obtention d'informations d'intensité respectives (S3) correspondant à la quantité de lumière mesurée par le capteur (131) ou obtenues par le contrôleur (13) pour chaque période pendant laquelle l'un des au moins deux pilotes (11, 12) est mis en marche,
l'évaluation des informations d'intensité obtenues, chaque pilote parmi les au moins deux pilotes (11, 12) étant associé à une information d'intensité correspondante,
et l'affectation de chacun des au moins deux pilotes (11, 12) soit au premier groupe correspondant à la lumière directe, soit au second groupe correspondant à la lumière indirecte, sur la base des informations d'intensité évaluées (S31, S32).
